# FASCICULE DE BREVET EUROPEEN

(11) **EP 3 540 602 B1**
(45) Date de publication et mention de la délivrance du brevet: **16.12.2020**
(21) Numéro de dépôt: 19164830.2
(22) Date de dépôt: 09.09.2014
(51) Int. Cl.: G06F 11/14

(54) **PROCÉDÉ DE MISE À JOUR D'UN LOGICIEL DE DÉMARRAGE D'UN DISPOSITIF MULTIPROCESSEUR**
AKTUALISIERUNGSVERFAHREN EINER EINSCHALTSOFTWARE EINER MULTIPROZESSORVORRICHTUNG
METHOD FOR UPDATING A BOOT LOADER FOR A MULTIPROCESSOR DEVICE

(30) Priorité: 10.09.2013 FR 1358710
(43) Date de publication de la demande: 18.09.2019
(62) Demande divisionnaire de: 14761841.7
(73) Titulaire: SAGEMCOM BROADBAND SAS, 92500 Rueil-Malmaison (FR)
(72) Inventeur: DANGY-CAYE, Nicolas, 92500 RUEIL MALMAISON (FR)
(74) Mandataire: Cabinet Le Guen Maillet

(56) Documents cités:
- US-A1- 2007 174 601
- US-A1- 2007 180 223
- US-A1- 2009 094 450
- US-A1- 2010 131 694

## Description

La présente invention concerne un procédé de mise à jour d'un logiciel de démarrage (en anglais « boot loader ») d'un système multiprocesseur, et un système multiprocesseur apte à mettre en œuvre le procédé.

Un grand nombre de dispositifs électroniques inclut du logiciel. Le logiciel de ces dispositifs est souvent décomposé en deux parties : d'une part, le logiciel de démarrage, et d'autre part, le logiciel applicatif.

Dans les dispositifs électroniques actuels, il est bien souvent possible de mettre à jour le logiciel, notamment pour des produits communicants connectés à un réseau. La mise à jour du logiciel de démarrage est une phase critique. Un affichage, pendant cette mise à jour, d'un message d'avertissement précisant de ne pas couper l'alimentation du dispositif électronique est bien connu, mais n'offre aucune sécurité face à une anomalie électrique, telle qu'une coupure électrique accidentelle ou mal intentionnée.

Pour cela, une solution de double démarrage (« Dual Boot » en anglais) consiste à prévoir deux segments de mémoire réinscriptible non volatile, parmi lesquels un premier segment comprend un logiciel de démarrage courant et un second segment comprend un nouveau logiciel de démarrage. Après l'écriture en mémoire du nouveau logiciel de démarrage, une vérification de l'intégrité du logiciel écrit est effectuée avant de basculer sur le nouveau logiciel de démarrage. Cette méthode nécessite de substantiellement doubler la capacité de la mémoire réinscriptible non volatile, ce qui grève le coût d'un tel produit.

Il convient de noter le document de brevet US2009/094450 A1 qui divulgue un procédé de mise à jour d'un logiciel de démarrage stocké dans une mémoire non volatile réinscriptible (mémoire partagée) d'un dispositif comprenant deux processeurs dont un est apte à exécuter le logiciel de démarrage.

Il est souhaitable de pallier les inconvénients susmentionnés de l'état de la technique.

L'invention concerne un procédé de mise à jour d'un logiciel de démarrage selon la revendication 1. Avec un tel procédé, on ne craint pas un problème de redémarrage incontrôlable suite à une corruption de cette mémoire intervenue lors d'une mise à jour du logiciel de démarrage, notamment à cause d'une coupure d'alimentation électrique.

Selon un mode de réalisation, le procédé comprend une phase de mise à jour du logiciel de démarrage, mise en œuvre par le second processeur, comprenant les étapes suivantes : basculer le premier processeur dans le mode de mise à jour du logiciel de démarrage; écrire un nouveau logiciel de démarrage dans la mémoire non volatile réinscriptible ; vérifier si le nouveau logiciel de démarrage tel qu'écrit dans la mémoire non volatile réinscriptible est valide ; répéter la phase de mise à jour à l'étape consistant à écrire le nouveau logiciel de démarrage, lorsque le nouveau logiciel de démarrage tel qu'écrit n'est pas valide ; et basculer le premier processeur dans un mode de fonctionnement usuel, lorsque le nouveau logiciel tel qu'écrit est valide. Ainsi, le logiciel de démarrage est mis à jour.

Selon un mode de réalisation, le procédé comprend en outre les étapes suivantes, mises en œuvre par le second processeur, lors d'un démarrage dudit dispositif: vérifier si le premier processeur est dans un état de fonctionnement normal apte à communiquer avec le second processeur ; et lancer la phase de mise à jour du logiciel de démarrage, lorsque le premier processeur n'est pas dans l'état normal de fonctionnement. Ainsi, la vérification permet d'effectuer un démarrage, même si le logiciel de démarrage est invalidé. Dans ce cas, le dispositif démarre grâce au second processeur pour passer dans le mode de mise à jour.

Selon un mode de réalisation, pour vérifier l'état de fonctionnement du premier processeur, le second processeur effectue les étapes suivantes : envoyer un premier message audit processeur ; considérer l'état de fonctionnement du premier processeur comme normal, lorsque le second processeur reçoit un second message acquittant le premier message dans un délai prédéfini ; et considérer l'état de fonctionnement du premier processeur comme anormal, lorsque le second processeur ne reçoit pas le second message acquittant le premier message dans le délai prédéfini. Ainsi, la vérification est obtenue par une phase de synchronisation entre le premier processeur et le second processeur. L'état de fonctionnement du premier processeur est jugé anormal, si le premier processeur ne répond pas au message du second processeur demandant si le premier processeur est bien dans un état normal de fonctionnement.

Selon un mode de réalisation, le procédé comprend en outre, lors de l'extinction dudit dispositif, les étapes suivantes : vérifier si le logiciel de démarrage stocké dans la mémoire non volatile réinscriptible est valide; et lancer, à l'aide du second processeur, la phase de mise à jour du logiciel de démarrage, lorsque le logiciel de démarrage stocké dans la mémoire non volatile réinscriptible n'est pas valide. Ainsi, il est possible de détecter des problèmes de corruption de la mémoire non volatile réinscriptible intervenus pendant le fonctionnement normal. Cela permet de remplacer le logiciel de démarrage corrompu et prévenir un dysfonctionnement.

L'invention concerne également un produit programme d'ordinateur selon la revendication 5, un support de stockage selon la revendication 6 et dispositif comprenant un premier processeur et un second processeur selon la revendication 7.

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints parmi lesquels :
- la Fig. 1 est une vue schématique d'une architecture matérielle d'un dispositif biprocesseur, selon un mode de réalisation de l'invention ;
- la Fig. 2 est une illustration schématique d'un algorithme de mise à jour d'un logiciel de démarrage, l'algorithme étant exécuté par un processeur du dispositif de la Fig. 1 ;
- la Fig. 3 est une illustration schématique d'un algorithme de démarrage du processeur auxiliaire de la Fig. 1 ;
- la Fig. 4 est une illustration schématique d'un algorithme de gestion d'une interruption lors d'une perte d'alimentation, selon un mode de réalisation particulier de l'invention ;
- la Fig. 5 est une illustration schématique d'un algorithme d'extinction du dispositif ;
- la Fig. 6 est une illustration schématique d'une première séquence de démarrage du dispositif ;
- la Fig. 7 est une illustration schématique d'une seconde séquence de démarrage du dispositif.

La description détaillée ci-dessous fait référence à dispositif comportant un premier processeur ou microprocesseur, appelé processeur auxiliaire, et un second processeur ou microprocesseur, appelé processeur principal. Le processeur auxiliaire peut être dédié à la gestion du démarrage et de la surveillance en mode veille du dispositif. Le processeur principal peut avoir en charge la fonction principale assurée par le dispositif. Cependant, ceci n'est qu'un exemple et le processeur auxiliaire peut tout aussi bien prendre en charge toute autre fonction. La description détaillée ci-dessous ne fait référence qu'aux fonctionnalités mises en œuvre par le processeur auxiliaire et par le processeur principal dans le cadre d'une mise à jour d'un logiciel de démarrage dudit processeur auxiliaire.

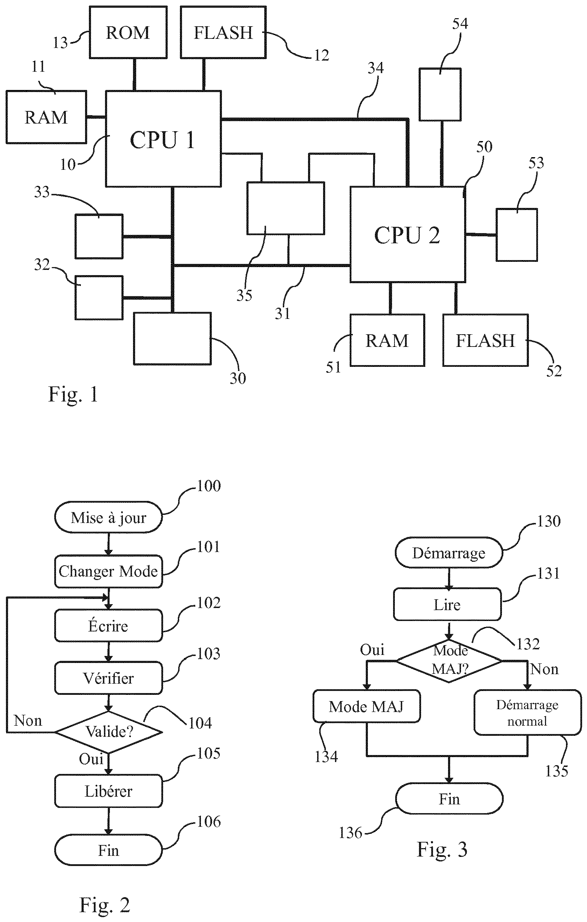

La Fig. 1 illustre schématiquement une architecture d'un dispositif biprocesseur, selon un mode de réalisation de l'invention. Cette architecture comprend un processeur auxiliaire 10 et un processeur principal 50, tous deux étant électriquement alimentés par une alimentation 30, dite *alimentation principale.*

Le processeur auxiliaire 10 est relié, par exemple à travers un bus, à une mémoire vive RAM 11 (« Random Access Memory » en anglais), à une mémoire non volatile réinscriptible 12, telle qu'une mémoire de type Flash, et à une mémoire morte ROM 13 (« Read Only Memory » en anglais).

Le processeur principal 50 est connecté, par exemple à travers un bus, à une RAM 51, à une mémoire non volatile réinscriptible 52, telle qu'une mémoire de type Flash, et à une unité de stockage 53 fixe ou amovible. Cette unité de stockage 53 est par exemple un disque dur HDD (« Hard Disk Drive » en anglais), ou un lecteur de cartes mémoire amovibles. Le processeur principal 50 est en outre connecté à des moyens de communication externe 54 permettant notamment de recevoir des mises à jour de tout ou partie du logiciel du dispositif. Ces moyens de communication externe 54 peuvent être un port de communication de type Ethernet, xDSL (acronyme pour désigner les technologies de type « Digital Subscriber Line » en anglais) ou WiFi, ou bien un port de communication de type USB (« Universal Serial Bus » en anglais).

Par ailleurs, le processeur auxiliaire 10 et le processeur principal 50 sont reliés par des moyens de communication internes 34, pour échanger des données sous forme de messages ou de signaux. Ces moyens de communication internes 34 sont par exemple un bus, comme un bus série, ou un bus parallèle, des ports d'entrée/sortie, utilisés séparément ou conjointement.

Enfin, l'alimentation 30, alimentant le dispositif biprocesseur, alimente les deux processeurs par une ligne d'alimentation 31. Sur la ligne d'alimentation 31 sont présents des moyens de surveillance 32 d'anomalie électrique intervenant sur l'alimentation 30. Les moyens de surveillance 32 sont préférentiellement adaptés pour surveiller la tension délivrée par l'alimentation 30.

Les moyens de surveillance 32 sont par exemple mis en œuvre grâce à un comparateur. Sur une première entrée du comparateur est injecté un signal de tension continue de référence, par exemple fixée à 1.8 V ou 3.3 V, obtenue à grâce à un convertisseur DC-DC abaisseur de tension connecté à la ligne d'alimentation 31. Sur une seconde entrée du comparateur est injecté le signal de l'alimentation 30, par exemple fixé à 12 V lorsqu'aucune anomalie électrique n'est à déplorer, après passage dans un pont diviseur de tension visant à ramener la tension à une valeur substantiellement égale à ladite tension continue de référence. Le comparateur est ainsi adapté pour détecter lorsque la tension de l'alimentation 30 chute suite à une anomalie électrique.

Dans une variante de réalisation, les moyens de surveillance 32 sont par exemple mis en œuvre grâce à un comparateur couplé à un convertisseur analogique-numérique. Le convertisseur analogique-numérique est adapté pour recevoir en entrée la tension délivrée par l'alimentation 30. Le comparateur est alors adapté pour comparer une valeur numérique représentative de la tension délivrée par l'alimentation 30 et un seuil prédéfini, par exemple fixé à 10 V lorsque la tension attendue de l'alimentation électrique 30 est de 12 V. Un tel convertisseur analogique-numérique peut être intégré au processeur auxiliaire 10 ou au processeur principal 50.

Sur la ligne d'alimentation 31 est aussi présente une alimentation de secours 33 destinée à alimenter, en cas d'anomalie électrique, au moins les deux processeurs et des composants nécessaires au fonctionnement des deux processeurs. Les moyens de surveillance 32 sont adaptés pour prévenir le processeur principal 50 en cas d'anomalie électrique subie par le dispositif. Cette anomalie électrique peut par exemple être une simple chute temporaire de tension. L'anomalie électrique peut également être une coupure de l'alimentation électrique 30.

L'alimentation de secours 33 est par exemple une pile, un accumulateur, un condensateur ou un supercondensateur. La capacité de l'alimentation de secours 33 est choisie pour permettre le fonctionnement des composants vitaux pendant un laps de temps permettant, si nécessaire, d'invalider le logiciel de démarrage, ou d'effacer tout ou partie de la mémoire non volatile réinscriptible 12. Les composants vitaux comprennent le processeur principal 50 et le processeur auxiliaire 10 plus les composants nécessaires à leurs fonctionnements respectifs pour assurer l'opération consistant à effacer tout ou partie de la mémoire non volatile réinscriptible 12, ou à invalider le logiciel de démarrage.

Chacun des processeurs, le processeur auxiliaire 10 et le processeur principal 50, sont aptes à exécuter un jeu d'instructions pour mettre en œuvre tout ou partie des algorithmes décrits ci-après. Le processeur auxiliaire 10 est capable d'exécuter des instructions depuis la mémoire non volatile réinscriptible 12 et/ou depuis la RAM 11. Le processeur auxiliaire 10 est en outre capable d'exécuter des instructions depuis la ROM 13, typiquement après chargement dans la RAM 11. Le processeur principal 50 est capable d'exécuter des instructions depuis la mémoire non volatile réinscriptible 52 et/ou depuis la RAM 51.

Le processeur auxiliaire 10 utilise, d'une part, un logiciel de démarrage du dispositif présent dans la mémoire non volatile réinscriptible 12 à chaque séquence de démarrage dudit dispositif. D'autre part, pour la mise à jour du logiciel de démarrage, le processeur auxiliaire 10 dispose dans la ROM 13, d'un logiciel de mise à jour (appelé en anglais « update software »). Ce logiciel de mise à jour est apte à effacer et écrire, dans la mémoire non volatile réinscriptible 12, un nouveau logiciel de démarrage transmis par le processeur principal 50 via les moyens de communication internes 34.

Le processeur principal 50 est apte à exécuter une application de mise à jour du logiciel de démarrage du processeur auxiliaire 10. Cette application de mise à jour peut être stockée dans la mémoire non volatile réinscriptible 52. Le processeur principal 50 est en outre adapté pour exécuter d'autres types d'applications, stockées dans la mémoire non volatile réinscriptible 52, ou dans l'unité de stockage 53.

Enfin, le dispositif est équipé de moyens de séquencement 35 du démarrage entre le processeur auxiliaire 10 et le processeur principal 50, appelés *séquenceur.* Le séquenceur 35 initie en premier lieu le démarrage du processeur auxiliaire 10, puis celui du processeur principal 50 retardé par rapport au démarrage du processeur auxiliaire 10. En situation de démarrage normal, le processeur auxiliaire 10 exécute le logiciel de démarrage. Ledit logiciel de démarrage démarre alors le processeur principal 50 et les deux processeurs se synchronisent. Le démarrage retardé sert lorsque le logiciel de démarrage, utilisé par le processeur auxiliaire 10, est corrompu. Le démarrage retardé permet au dispositif de démarrer partiellement malgré tout, pour mettre à jour le logiciel de démarrage défectueux.

Selon un mode de réalisation préféré, le processeur auxiliaire 10 est un microcontrôleur incluant la RAM 11, la mémoire non volatile réinscriptible 12 et la ROM 13.

Selon une variante, le processeur auxiliaire 10 et le processeur principal 50 sont intégrés dans un composant du type SoC (de l'anglais « System on Chip »).

Certains des éléments représentés, notamment le processeur auxiliaire 10, le processeur principal 50 et le séquenceur 35, peuvent être réalisés sous différentes formes, de manière unitaire ou distribuée, au moyen de composants matériels, tels que des circuits intégrés spécifiques ASIC (de l'anglais « Application Specific Integrated Circuit ») ou des réseaux logiques programmables FPGA (de l'anglais « Field Programmable Gate Array »).

En référence aux Figs. 2 et 3, une mise à jour du logiciel de démarrage du processeur auxiliaire 10 va maintenant être décrite. Préalablement à cette mise à jour, le processeur principal 50 a reçu un nouveau logiciel de démarrage via le moyen de communication externe 54. Le nouveau logiciel de démarrage reçu a été vérifié quant à son origine et son intégrité. Par exemple, si le logiciel de démarrage est reçu crypté et signé, le processeur principal 50 procède à une vérification de l'empreinte, également appelée somme de contrôle (« checksum » en anglais), et au décryptage des données reçues constituant le logiciel de démarrage. Les méthodes de signature employées sont des méthodes connues, comme les signatures MD5, SHA. De même, les méthodes pour crypter et décrypter des données, par cryptage symétrique, dit à clé secrète, ou asymétrique, dit à clé publique, sont connues, comme par exemple AES (de l'anglais « Advanced Encryption Standard ») ou les algorithmes DES (de l'anglais « Data Encryption Standard ») ou encore RSA (du nom des auteurs « Rivest Shamir Adleman »). Une phase de mise à jour 100 d'un nouveau logiciel de démarrage s'applique donc après la réception d'un nouveau logiciel de démarrage valide stocké localement, dans l'un des moyens de stockage dont dispose le processeur principal 50, comme la mémoire RAM 51, la mémoire non volatile réinscriptible 52 ou l'unité de stockage 53. En cas d'utilisation de la RAM 51 pour stocker localement le logiciel de démarrage, si une coupure d'alimentation survient au cours de la phase de mise à jour, le processeur principal 50 récupère de nouveau le nouveau logiciel de démarrage, par exemple par un téléchargement.

Lors d'un lancement de la phase de mise à jour 100 du logiciel de démarrage, le processeur auxiliaire 10 change de mode de fonctionnement. En effet, le dispositif comprend plusieurs modes de fonctionnement, notamment un mode de fonctionnement usuel et un mode de mise à jour. Le mode de mise à jour permet de remplacer le logiciel de démarrage courant par un nouveau logiciel de démarrage. Dans le mode de fonctionnement usuel, le dispositif peut être dans deux états de fonctionnement, d'une part, un état normal de fonctionnement, d'autre part un état anormal de fonctionnement. Le dispositif est dans l'état anormal de fonctionnement, lorsque le logiciel de démarrage a été invalidé ; sinon, le dispositif est dans l'état normal de fonctionnement.

Dans une étape 101, le processeur principal 50 bascule le processeur auxiliaire 10 en mode de mise à jour. Pour cela, le processeur principal 50 utilise les moyens de communication internes 34. Dans un mode de réalisation particulier, les moyens de communication internes 34 reposant sur des lignes d'entrée/sortie, le processeur principal 50 fixe sur ces lignes d'entrée/sortie une valeur de vecteur dédiée, nommée « valeur de mode mise à jour », puis initie un redémarrage du processeur auxiliaire 10, dont le comportement est décrit ci-après à l'aide de la Fig. 3.

Une fois que le processeur auxiliaire 10 a démarré en mode de mise à jour, le processeur principal 50 peut utiliser des fonctionnalités de mise à jour proposées par le logiciel de mise à jour du processeur auxiliaire 10. Les fonctionnalités disponibles sont notamment celles permettant d'effacer, d'écrire ou encore de lire la mémoire non volatile réinscriptible 12.

Dans une étape 102, le processeur principal 50 écrit, ou instruit le processeur auxiliaire 10 d'écrire, le nouveau logiciel de démarrage dans la mémoire non volatile réinscriptible 12. Pour cela, le processeur principal 50 transfère les données du nouveau logiciel de démarrage à l'aide des moyens de communication internes 34.

Dans une étape 103, le processeur principal 50 procède à une vérification d'intégrité des données présentes dans la mémoire non volatile réinscriptible 12. Cette vérification peut être réalisée par différents moyens, comme un calcul d'une somme de contrôle sur les données écrites dans la mémoire non volatile réinscriptible 12. Cette somme de contrôle est ensuite comparée à une somme de contrôle calculée sur les données stockées localement dans la RAM 51 et qui correspondent au nouveau logiciel de démarrage tel qu'obtenu par le processeur principal 50. En variante, la vérification est obtenue par une relecture complète et une comparaison des données brutes présentes dans la mémoire non volatile réinscriptible 12, avec les données stockées localement dans la RAM 51 et qui correspondent au nouveau logiciel de démarrage tel qu'obtenu par le processeur principal 50.

Dans une étape 104, à l'issue de la vérification, le processeur principal 50 teste si le résultat de l'écriture est valide ou n'est pas valide, pour identifier la présence dans la mémoire non volatile réinscriptible 12 de données erronées. Si des données sont erronées, l'étape 102 d'écriture des données du nouveau logiciel de démarrage est réitérée ; sinon, c'est-à-dire que les données sont valides, une étape 105 est effectuée.

Lors de l'étape 105, le processeur principal 50 bascule le processeur auxiliaire 10 en mode de fonctionnement usuel. Pour cela, le processeur principal 50 supprime la valeur du vecteur de mode mise à jour sur les lignes d'entrée/sortie des moyens de communication internes 34. Ensuite le processeur principal 50 redémarre le processeur auxiliaire 10 si nécessaire.

Enfin, dans une étape 106, la phase de mise à jour 100 prend fin, par exemple par un redémarrage complet du dispositif.

Pour permettre la mise à jour du logiciel de démarrage, le processeur principal 50 bascule le processeur auxiliaire 10 dans le mode de mise à jour. En référence à la Fig.3, un algorithme montre la séquence 130 de démarrage du processeur auxiliaire 10.

Dans une étape 131, le processeur auxiliaire 10 lit une valeur présente sur les lignes d'entrée/sortie des moyens de communication internes 34.

Dans une étape 132, le processeur auxiliaire 10 vérifie si la valeur lue correspond à une valeur de vecteur de type « valeur de mode mise à jour ». Si le vecteur correspond à la valeur « valeur de mode mise à jour », le processeur auxiliaire 10 effectue une étape 134. Sinon, le dispositif démarre dans le mode de fonctionnement usuel et une étape 135 est effectuée.

Dans l'étape 135, le processeur auxiliaire 10 exécute le logiciel de démarrage présent dans la mémoire non volatile réinscriptible 12.

Dans l'étape 134, le processeur auxiliaire 10 exécute le logiciel de mise à jour, par exemple en téléchargeant le logiciel de mise à jour depuis la ROM 13 dans la RAM 11 et en exécutant le logiciel de mise à jour à partir de la RAM 11. Le processeur auxiliaire 10 permet alors au processeur principal 50 d'accéder à la mémoire non volatile réinscriptible 12 pour effectuer les étapes d'écriture ou de vérification liées à la phase de mise à jour décrite ci-dessus en relation avec la Fig. 2.

Le mode de fonctionnement usuel peut être contrarié, notamment par une coupure d'alimentation au cours de la phase de mise à jour 100 qui est une situation de cas aux limites. Si un tel évènement se produit, la complétude de l'opération de mise à jour n'est pas obtenue et la mémoire non volatile réinscriptible 12 contient une partie seulement du nouveau logiciel de démarrage. Du fait que la quantité de logiciel correctement écrite ne peut être garantie, le comportement de ce logiciel parcellaire n'est absolument pas déterministe et peut notamment bloquer le dispositif si la mémoire non volatile réinscriptible 12 reste en l'état, ou produire un comportement erratique.

Pour prévenir cette situation de cas aux limites, il convient, d'une part, de rendre inopérant le logiciel de démarrage présent dans la mémoire non volatile réinscriptible 12 et, d'autre part, de prévoir un mécanisme de démarrage de secours du dispositif. Ce mécanisme de secours doit pouvoir permettre de détecter cette situation de cas aux limites et forcer une nouvelle mise à jour du logiciel de démarrage.

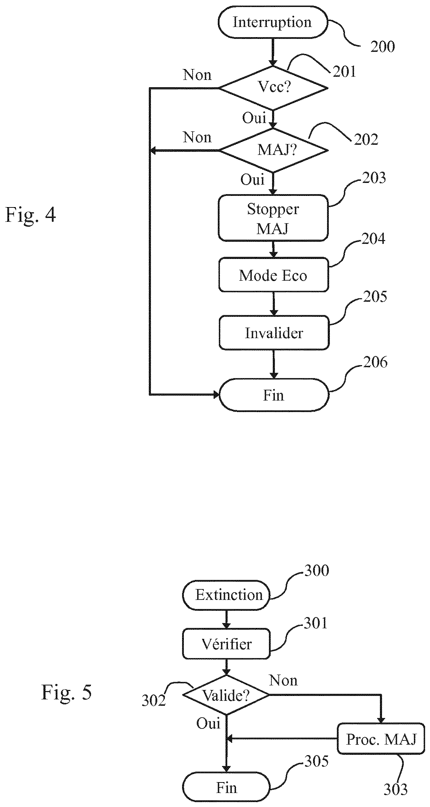

En référence à la Fig. 4, le comportement du dispositif en cas de coupure d'alimentation va être présenté avec la procédure correspondante. Cette procédure est une procédure d'interruption déclenchée par l'arrivée d'un événement externe reçu par le processeur principal 50. Cet événement, ou interruption, est produit par les moyens de surveillance 32 lorsqu'une anomalie électrique est détectée sur l'alimentation 30.

Dans une étape 200, la procédure d'interruption du processeur principal 50 est activée suite à la réception d'une interruption.

Dans une étape 201, le processeur principal 50 vérifie l'origine de l'interruption, afin de s'assurer que l'interruption reçue est liée à une anomalie électrique. Lorsque l'interruption ne correspond pas à une anomalie électrique, cette interruption est traitée indépendamment de l'algorithme de la Fig. 4. Il est alors mis fin à l'algorithme dans une étape 206. Sinon, lorsqu'une anomalie électrique est à l'origine de l'interruption, une étape 202 est effectuée.

Dans l'étape 202, le processeur principal 50 vérifie si une mise à jour du logiciel de démarrage est en cours. S'il n'y a pas de mise à jour en cours, il est mis fin à l'algorithme dans l'étape 206. Si l'interruption intervient pendant la mise à jour, une étape 203 est effectuée.

Dans l'étape 203, la mise à jour du logiciel de démarrage est interrompue.

Dans une étape 204 optionnelle, le dispositif est basculé dans un mode d'économie d'énergie en stoppant l'alimentation électrique de composants non vitaux, c'est-à-dire les composants non indispensables au fonctionnement du processeur auxiliaire 10 et du processeur principal 50.

Lors d'une étape 205, le processeur principal 50 envoie au processeur auxiliaire 10 un ordre d'invalider le logiciel de démarrage présent dans la mémoire non volatile réinscriptible 12. Les étapes 203 à 205 forment ainsi une phase de sécurisation du démarrage du dispositif. Il est ensuite mis fin à l'algorithme dans l'étape 206.

L'invalidation du logiciel de démarrage peut être réalisée de différentes manières. Il importe simplement que les données présentes dans la mémoire non volatile réinscriptible 12 ne soient pas interprétables par le processeur auxiliaire 10 comme des instructions, afin que le processeur auxiliaire 10 ait un comportement prédictible. Par exemple, des instructions peuvent être écrites pour que le processeur auxiliaire 10 reste dans un état bloqué en exécutant ces instructions. Les données écrites à la place du logiciel de démarrage peuvent donc être toutes données aptes à bloquer le processeur auxiliaire 10 lors d'un démarrage.

En variante, l'invalidation du logiciel de démarrage peut être réalisée grâce à des instructions NOP (de l'anglais « No Operation ») ne faisant rien. À titre d'exemple, une telle instruction est codée par les octets 0x4e71 dans la famille de microprocesseurs Motorola (marque déposée) 680x0, ou encore 0x00 pour la famille de microcontrôleurs Intel (marque déposée) 8051 et encore 0x00000000 pour la famille ARM (marque déposée). Il est également possible de remplacer le logiciel de démarrage par une boucle sans fin. À titre d'exemple, cela peut être réalisé par une simple instruction de branchement inconditionnel qui boucle sur elle-même. De plus, certains processeurs ou microcontrôleurs, notamment de ceux intégrant la mémoire non volatile réinscriptible, mettent à disposition une fonction d'effacement global de ladite mémoire non volatile réinscriptible, ce qui permet d'invalider le logiciel de démarrage.

Comme cela a été dit, la situation de cas aux limites nécessite également un mécanisme de démarrage de secours pouvant se substituer au démarrage normal du dispositif en cas de problème de corruption du logiciel de démarrage.

Ainsi, préférentiellement, le processeur principal 50 vérifie si le processeur auxiliaire 10 est dans l'état normal de fonctionnement apte à communiquer avec le processeur principal 50, et lance la phase de mise à jour du logiciel de démarrage, lorsque le processeur auxiliaire 10 n'est pas dans l'état normal de fonctionnement.

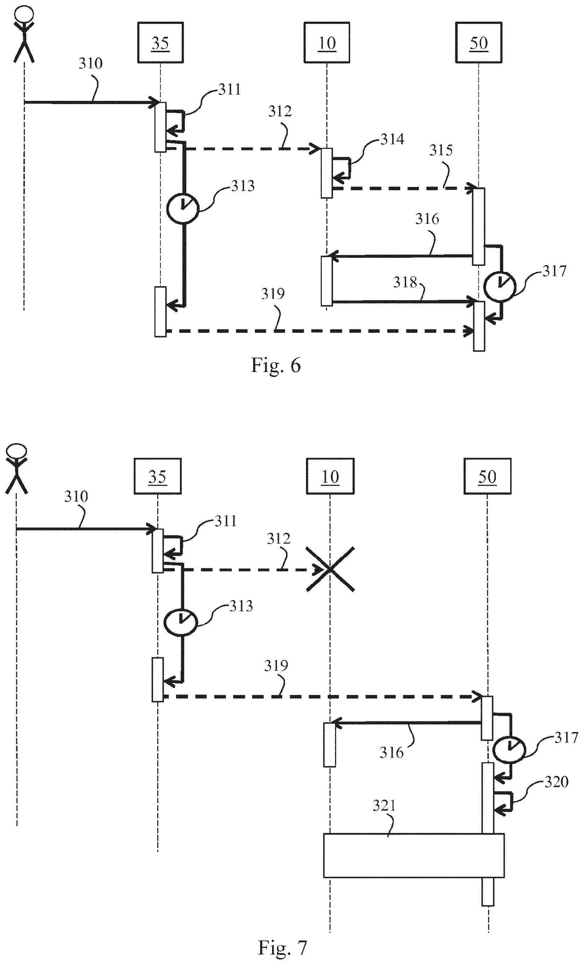

Le comportement du dispositif, et plus particulièrement du séquenceur 35, lors d'une phase de démarrage, va maintenant être décrit. Dans un premier temps, en référence au diagramme de séquences de la Fig. 6, la description porte sur un scénario où le logiciel de démarrage est valide. Dans un second temps, en référence au diagramme de séquences de la Fig. 7, la description porte un scénario où le logiciel de démarrage a été invalidé. Un séquencement de démarrage est obtenu à l'aide de temporisations (« timer » en anglais), mais peut également être obtenu avec des lignes à retard ou tout autre moyen de retarder une action par rapport à une autre.

Pour utiliser le dispositif, l'utilisateur effectue une action pour démarrer le dispositif, comme par exemple en appuyant sur un bouton marche/arrêt du dispositif ou en branchant le dispositif sur une prise secteur. Cette action est détectée par le dispositif dans une étape 310 et une information représentative de cette action est communiquée au séquenceur 35.

Dans une étape 311, le séquenceur 35 attend que des composants du dispositif soient opérationnels. Le séquenceur 35 lance typiquement une temporisation de durée prédéfinie. Notamment, le séquenceur 35 attend la stabilisation de l'alimentation 30, mais également le séquenceur 35 attend par exemple la stabilisation d'oscillateurs (non représentés).

Ensuite, dans une étape 312, le séquenceur 35 ordonne au processeur auxiliaire 10 de démarrer et, dans une étape 313, initie un démarrage retardé du processeur principal 50 selon un délai prédéfini.

Dans le mode de fonctionnement usuel, dans une étape 314, le processeur auxiliaire 10 exécute le logiciel de démarrage, en réponse à l'ordre reçu du séquenceur 35. Le logiciel de démarrage, dans une étape 315, ordonne au processeur principal 50 de démarrer, puis à l'aide d'une procédure de synchronisation, le processeur principal 50 et le processeur auxiliaire 10 se synchronisent, validant ainsi le démarrage du dispositif. Cette procédure de synchronisation est par exemple réalisée par un échange de messages à l'aide des moyens de communication internes 34. Pour illustrer cet échange, le processeur principal 50, dans une étape 316, envoie un premier message de synchronisation au processeur auxiliaire 10. En outre, dans une étape 317, le processeur principal 50 active un chien de garde (« watchdog » en anglais) pour éviter de rester bloqué en attente d'un acquittement du premier message de synchronisation. Dans une étape 318, le processeur auxiliaire 10 étant opérationnel (c'est-à-dire dans un état normal de fonctionnement), le processeur auxiliaire 10 répond par un second message, d'acquittement du premier message, avant l'expiration du chien de garde. La phase de démarrage du dispositif est alors terminée et le dispositif est dans l'état normal de fonctionnement.

Dans ce cas de fonctionnement usuel, le démarrage retardé initié dans une étape 319 par le séquenceur 35 n'a pas d'incidence sur le fonctionnement du dispositif, le processeur principal 50 étant déjà démarré.

Dans une variante de réalisation, dans le cas de fonctionnement usuel, le logiciel de démarrage comporte des instructions demandant au processeur auxiliaire 10 de bloquer le démarrage du processeur principal 50 pendant une période prédéfinie, de telle sorte que le démarrage retardé initié dans une étape 319 par le séquenceur 35 n'a pas d'incidence sur le fonctionnement du dispositif.

Dans le cas où le logiciel de démarrage a été invalidé, le processeur auxiliaire 10 n'exécute pas d'instruction valide pour démarrer le processeur principal 50. Le dispositif a démarré en mode de fonctionnement usuel, mais le processeur auxiliaire 10 est dans l'état anormal de fonctionnement. Cette situation est illustrée par le diagramme de séquence de la Fig. 7.

Tout comme pour le scénario de fonctionnement normal, l'utilisateur effectue une action pour démarrer le dispositif. Cette action est détectée par le dispositif dans l'étape 310 et une information représentative de cette action est communiquée au séquenceur 35. Puis, dans l'étape 311, le séquenceur 35 attend que des composants du dispositif soient opérationnels.

Ensuite, dans l'étape 312, le séquenceur 35 tente de démarrer le processeur auxiliaire 10 et, dans l'étape 313, initie le démarrage retardé du processeur principal 50. Cependant, dans ce scénario, le processeur auxiliaire 10 reste bloqué à cause du logiciel de démarrage invalidé.

Le démarrage du processeur principal 50 intervient alors par ordre du séquenceur 35, dans l'étape 319, à l'issue du délai prédéfini déjà mentionné. Ce délai est fixé afin que le temps écoulé depuis le démarrage du processeur auxiliaire 10 par le séquenceur 35 soit supérieur au temps nécessaire, en état normal de fonctionnement, au processeur auxiliaire 10 pour être capable de recevoir le premier message de synchronisation transmis par le processeur principal 50. Une fois démarré, dans l'étape 316, le processeur principal 50 envoie le premier message de synchronisation au processeur auxiliaire 10 et, dans l'étape 317, active le chien de garde. Cependant, le processeur auxiliaire 10 n'est pas dans l'état normal de fonctionnement et ne répond pas au premier message de synchronisation. À l'issue du délai fixé par le mécanisme de chien de garde, le processeur principal 50, dans une étape 320, constate que le processeur auxiliaire 10 n'est pas dans l'état normal de fonctionnement, c'est-à-dire que le processeur auxiliaire 10 n'est pas opérationnel. Le processeur principal 50, dans une étape 321, bascule alors le processeur auxiliaire 10 dans le mode de mise à jour, et procède à la mise à jour du logiciel de démarrage, tel que déjà décrit en relation avec les Figs. 2 et 3.

Le dispositif dont le comportement est décrit ci-dessus inclut des mécanismes permettant de mettre à jour le logiciel de démarrage sans augmenter les ressources nécessaires du dispositif et notamment la capacité de la mémoire non volatile réinscriptible utilisée pour stocker le logiciel de démarrage. Cependant, une corruption de données ou instructions stockées reste possible par une écriture infortune dans la mémoire non volatile réinscriptible 12. Afin de limiter ce risque, il est possible de forcer une vérification systématique de l'intégrité du logiciel de démarrage à chaque extinction du dispositif, que l'extinction soit complète ou corresponde à un mode « veille », avec une consommation d'énergie réduite. Par mode « veille », on entend par exemple un mode où seul le processeur auxiliaire 10 fonctionne et les composants non indispensables au fonctionnement du processeur auxiliaire 10 ne sont alors pas alimentés. Pour effectuer cette vérification systématique, l'algorithme de la Fig. 5 montre une procédure d'extinction 300.

Dans une étape 301, le processeur principal 50 vérifie l'intégrité du logiciel de démarrage présente dans la mémoire non volatile réinscriptible 12.

Dans une étape 302, le processeur principal 50 teste le résultat de la vérification. Si le test de validité est positif, une étape 305 est effectuée. Sinon, le test de validité est négatif, révélant ainsi une corruption du logiciel de démarrage présent dans la mémoire non volatile réinscriptible 12, et le processeur principal 50 effectue une étape 303.

Dans l'étape 303, le processeur principal 50 effectue la phase de mise à jour du logiciel de démarrage, telle que déjà décrite en relation avec la Fig. 2, puis l'étape 305 est effectuée.

Dans l'étape 305, le processeur principal 50 éteint le dispositif et il est mis fin à l'algorithme.

## Revendications

1. Procédé de mise à jour d'un logiciel de démarrage stocké dans une mémoire non volatile réinscriptible (12) d'un dispositif comprenant un premier processeur (10) et un second processeur (50), le premier processeur (10) étant apte à exécuter le logiciel de démarrage, le procédé étant mis en œuvre par le dispositif et **caractérisé en ce que** le procédé comporte une phase de démarrage retardé du second processeur (50) par rapport au démarrage du premier processeur (10) de manière à ce que :
- lorsque le logiciel de démarrage n'est pas valide, le dispositif démarre dans un mode de mise à jour du logiciel de démarrage et le premier processeur (10) est bloqué en raison que le logiciel de démarrage a été invalidé et le deuxième processeur (50) vérifie au démarrage si le premier processeur (10) effectue des échanges de messages pour synchroniser les premier (10) et second (50) processeurs et, lorsque le second processeur (50) ne reçoit pas de message du premier processeur (10), le second processeur (50) déclenche le mode de mise à jour du logiciel de démarrage ; et
- lorsque le logiciel de démarrage est valide, le dispositif démarre avec le logiciel de démarrage de sorte que le premier processeur (10) démarre avec le logiciel de démarrage et le logiciel de démarrage demande au premier processeur (10) de démarrer le deuxième processeur (50) et de se synchroniser par les échanges de messages.

2. Procédé selon la revendication 1, **caractérisé en ce que** la mise à jour du logiciel de démarrage, mise en œuvre par le second processeur (50), comprenant les étapes suivantes :
- basculer (101) le premier processeur dans le mode de mise à jour du logiciel de démarrage ;
- écrire (102) un nouveau logiciel de démarrage dans la mémoire non volatile réinscriptible ;
- vérifier (103) si le nouveau logiciel de démarrage tel qu'écrit dans la mémoire non volatile réinscriptible est valide ;
- répéter la mise à jour à l'étape consistant à écrire le nouveau logiciel de démarrage, lorsque le nouveau logiciel de démarrage tel qu'écrit n'est pas valide ; et
- basculer (105) le premier processeur (10) dans un mode de fonctionnement usuel, lorsque le nouveau logiciel tel qu'écrit est valide.

3. Procédé selon l'une des revendications 1 et 2, **caractérisé en ce que**, pour vérifier l'état de fonctionnement du premier processeur (10), le second processeur (50) effectue les étapes suivantes :
- envoyer un premier message au premier processeur (10) ;
- considérer l'état de fonctionnement du premier processeur (10) comme normal, lorsque le second processeur (50) reçoit un second message acquittant le premier message dans un délai prédéfini ; et
- considérer l'état de fonctionnement du premier processeur (10) comme anormal, lorsque le second processeur (50) ne reçoit pas le second message acquittant le premier message dans le délai prédéfini.

4. Procédé selon l'une quelconque des revendications 1 à 3, **caractérisé en ce qu'**il comprend en outre, lors de l'extinction dudit dispositif, les étapes suivantes :
- vérifier (301) si le logiciel de démarrage stocké dans la mémoire non volatile réinscriptible est valide; et
- lancer (303), à l'aide du second processeur (50), la mise à jour du logiciel de démarrage, lorsque le logiciel de démarrage stocké dans la mémoire non volatile réinscriptible n'est pas valide.

5. Produit programme d'ordinateur comportant des instructions pour implémenter, par des premier (10) et second (50) processeurs, le procédé selon l'une quelconque des revendications 1 à 4, lorsque lesdites instructions sont exécutées par lesdits premier (10) et second (50) processeurs.

6. Support de stockage lisible par ordinateur stockant un produit programme d'ordinateur selon la revendication 5.

7. Dispositif comprenant un premier processeur (10) et un second processeur (50), le premier processeur étant apte à exécuter un logiciel de démarrage stocké dans une mémoire non volatile réinscriptible, le dispositif étant **caractérisé en ce qu'**il comporte des moyens pour effectuer une phase de démarrage retardé du second processeur (50) par rapport au démarrage du premier processeur (10) de manière à ce que :
- lorsque le logiciel de démarrage n'est pas valide, le dispositif comporte des moyens pour démarrer dans un mode de mise à jour du logiciel de démarrage, le premier processeur (10) étant configuré pour être bloqué en raison que le logiciel de démarrage a été invalidé et le deuxième processeur (50) étant configuré pour vérifier au démarrage si le premier processeur (10) effectue des échanges de messages pour synchroniser les premier (10) et second (50) processeurs et, lorsque le second processeur (50) ne reçoit pas de message du premier processeur (10), le second processeur (50) comporte des moyens pour déclencher le mode de mise à jour du logiciel de démarrage ; et
- lorsque le logiciel de démarrage est valide, le dispositif comporte des moyens pour démarrer avec le logiciel de démarrage de sorte que le premier processeur (10) démarre avec le logiciel de démarrage et le logiciel de démarrage demande au premier processeur (10) de démarrer le deuxième processeur (50) et de se synchroniser par les échanges de messages.

## Patentansprüche

1. Aktualisierungsverfahren einer Startsoftware, die in einem wiederbeschreibbaren nichtflüchtigen Speicher (12) einer Vorrichtung gespeichert ist, die einen ersten Prozessor (10) und einen zweiten Prozessor (50) enthält, wobei der erste Prozessor (10) die Startsoftware ausführen kann, wobei das Verfahren von der Vorrichtung durchgeführt wird und **dadurch gekennzeichnet ist, dass** das Verfahren eine verzögerte Startphase des zweiten Prozessors (50) bezüglich des Starts des ersten Prozessors (10) aufweist, damit:
- wenn die Startsoftware nicht gültig ist, die Vorrichtung in einem Aktualisierungsmodus der Startsoftware startet und der erste Prozessor (10) aufgrund dessen blockiert ist, dass die Startsoftware ungültig gemacht wurde, und der zweite Prozessor (50) beim Start überprüft, ob der erste Prozessor (10) Nachrichtenaustauschvorgänge ausführt, um den ersten (10) und den zweiten (50) Prozessor zu synchronisieren, und, wenn der zweite Prozessor (50) keine Nachricht vom ersten Prozessor (10) empfängt, der zweite Prozessor (50) den Aktualisierungsmodus der Startsoftware auslöst; und
- wenn die Startsoftware gültig ist, die Vorrichtung mit der Startsoftware derart startet, dass der erste Prozessor (10) mit der Startsoftware startet und die Startsoftware vom ersten Prozessor (10) fordert, den zweiten Prozessor (50) zu starten und sich durch die Nachrichtenaustauschvorgänge zu synchronisieren.

2. Verfahren nach Anspruch 1, **dadurch gekennzeichnet, dass** die vom zweiten Prozessor (50) durchgeführte Aktualisierung der Startsoftware die folgenden Schritte enthält:
- Umschalten (101) des ersten Prozessors in den Aktualisierungsmodus der Startsoftware;
- Schreiben (102) einer neuen Startsoftware in den wiederbeschreibbaren nichtflüchtigen Speicher;
- Überprüfen (103), ob die neue Startsoftware, wie sie in den wiederbeschreibbaren nichtflüchtigen Speicher geschrieben wurde, gültig ist;
- Wiederholen der Aktualisierung in dem Schritt, der darin besteht, die neue Startsoftware zu schreiben, wenn die wie geschriebene neue Startsoftware nicht gültig ist; und
- Umschalten (105) des ersten Prozessors (10) in einen üblichen Betriebsmodus, wenn die neue Software wie geschrieben gültig ist.

3. Verfahren nach einem der Ansprüche 1 und 2, **dadurch gekennzeichnet, dass** der zweite Prozessor (50) zur Überprüfung des Betriebszustands des ersten Prozessors (10) die folgenden Schritte ausführt:
- Senden einer ersten Nachricht an den ersten Prozessor (10);
- Betrachten des Betriebszustands des ersten Prozessors (10) als normal, wenn der zweite Prozessor (50) eine zweite Nachricht empfängt, die die erste Nachricht in einer vordefinierten Frist quittiert; und
- Betrachten des Betriebszustands des ersten Prozessors (10) als anormal, wenn der zweite Prozessor (50) die zweite Nachricht, die die erste Nachricht quittiert, nicht in der vordefinierten Frist empfängt.

4. Verfahren nach einem der Ansprüche 1 bis 3, **dadurch gekennzeichnet, dass** es außerdem beim Ausschalten der Vorrichtung die folgenden Schritte enthält:
- Überprüfen (301), ob die im wiederbeschreibbaren nichtflüchtigen Speicher gespeicherte Startsoftware gültig ist; und
- Starten (303) der Aktualisierung der Startsoftware mit Hilfe des zweiten Prozessors (50), wenn die im wiederbeschreibbaren nichtflüchtigen Speicher gespeicherte Startsoftware nicht gültig ist.

5. Computerprogrammprodukt, das Anweisungen aufweist, um durch erste (10) und zweite (50) Prozessoren das Verfahren nach einem der Ansprüche 1 bis 4 zu implementieren, wenn die Anweisungen von den ersten (10) und zweiten (50) Prozessoren ausgeführt werden.

6. Computerlesbarer Speicherträger, der ein Computerprogrammprodukt nach Anspruch 5 speichert.

7. Vorrichtung, die einen ersten Prozessor (10) und einen zweiten Prozessor (50) enthält, wobei der erste Prozessor eine in einem wiederbeschreibbaren nichtflüchtigen Speicher gespeicherte Startsoftware ausführen kann, wobei die Vorrichtung **dadurch gekennzeichnet ist, dass** sie Einrichtungen aufweist, um eine verzögerte Startphase des zweiten Prozessors (50) bezüglich des Starts des ersten Prozessors (10) auszuführen, damit:
- wenn die Startsoftware nicht gültig ist, die Vorrichtung Einrichtungen aufweist, um in einem Aktualisierungsmodus der Startsoftware zu starten, wobei der erste Prozessor (10) konfiguriert ist, aufgrund dessen blockiert zu werden, dass die Startsoftware ungültig gemacht wurde, und der zweite Prozessor (50) konfiguriert ist, beim Start zu überprüfen, ob der erste Prozessor (10) Nachrichtenaustauschvorgänge ausführt, um den ersten (10) und den zweiten (50) Prozessor zu synchronisieren, und, wenn der zweite Prozessor (50) keine Nachricht vom ersten Prozessor (10) empfängt, der zweite Prozessor (50) Einrichtungen aufweist, um den Aktualisierungsmodus der Startsoftware auszulösen; und
- wenn die Startsoftware gültig ist, die Vorrichtung Einrichtungen aufweist, um mit der Startsoftware derart zu starten, dass der erste Prozessor (10) mit der Startsoftware startet und die Startsoftware vom ersten Prozessor (10) fordert, den zweiten Prozessor (50) zu starten und sich durch die NachrichtenAustauschvorgänge zu synchronisieren.

## Claims

1. A method of updating a boot loader stored in a rewritable non-volatile memory (12) of a device comprising a first processor (10) and a second processor (50), the first processor (10) being able to execute the boot loader, the method being implemented by the device and **characterized in that** the method comprises a phase of delayed booting of the second processor (50) with respect to booting of the first processor (10) so that:
- when the boot loader is not valid, the device boots in a mode of updating the boot loader and the first processor (10) is blocked because the boot loader has been invalidated and the second processor (50) checks, when booting whether the first processor (10) performs message exchanges to synchronize the first and second processors (10, 50) and, when the second processor (50) does not receive a message from the first processor (10), the second processor (50) initiates the mode of updating the boot loader; and
- when the boot loader is valid, the device boots with the boot loader so that the first processor (10) boots with the boot loader and the boot loader requests the first processor (10) to boot the second processor (50) and synchronize each other with the message exchanges.

2. The method according to claim 1, **characterized in that** when updating the boot loader, implemented by the second processor (50), comprises the following steps:
- switching (101) the first processor in the mode of updating the boot loader;
- writing (102) a new boot loader in the rewritable non-volatile memory;
- checking (103) whether the new boot loader as written in the rewritable non-volatile memory is valid;
- repeating the updating of the step consisting in writing the new boot loader, when the new boot loader as written is not valid; and
- switching (105) the first processor (10) in a usual operating mode, when the new boot loader as written is valid.

3. The method according to one of claims 1 and 2, **characterized in that**, for checking operating state of the first processor (10), the second processor (50) performs the following steps:
- sending a first message to the first processor (10);
- considering the operating state of the first processor (10) as normal, when the second processor (50) receives a second message acknowledging the first message within a predefined time period; and
- considering the operating state of the first processor (10) as abnormal, when the second processor (50) does not receive the second message acknowledging the first message within the predefined time period.

4. The method according to any one of Claims 1 to 3, **characterized in that** it further comprises the following steps, when powering off said device:
- checking (301) whether the boot loader stored in the rewritable non-volatile memory is valid; and
- launching (303), using the second processor (50), the updating of the boot loader, when the boot loader stored in the rewritable non-volatile memory is not valid.

5. Computer-program product comprising instructions for implementing, with the first and second processors (10, 50), the method according to any one of claims 1 to 4, when said instructions are executed by said first and second processors (10, 50)

6. Computer-readable storage medium storing a computer-program product according to claim 5.

7. A device comprising a first processor (10) and a second processor (50), the first processor being able to execute a boot loader stored in a rewritable non-volatile memory, the device being **characterized in that** it comprises means for performing a phase of delayed booting of the second processor (50) with respect to booting of the first processor (10) so that:
- when the boot loader is not valid, the device comprises means for booting in a mode of updating the boot loader, the first processor (10) being configured to be blocked because the boot loader has been invalidated and the second processor (50) configured for checking, when booting, whether the first processor (10) performs message exchanges to synchronize the first and second processors (10, 50) and, when the second processor (50) does not receive a message from the first processor (10), the second processor (50) comprises means for initiating the mode of updating the boot loader; and
- when the boot loader is valid, the device comprises means for booting with the boot loader so that the first processor (10) boots with the boot loader and the boot loader requests the first processor (10) to boot the second processor (50) and synchronize each other with the message exchanges.
